# EUROPEAN PATENT APPLICATION

(11) **EP 2 076 042 A1**
(43) Date of publication of application: **01.07.2009**
(21) Application number: 07301747.7
(22) Date of filing: 27.12.2007
(51) Int. Cl.: H04N 7/24

(54) **Apparatus and method for transmitting a digital stream**

(71) Applicant: Thomson Licensing, 92100 Boulogne-Billancourt (FR)
(72) Inventor: Xie, Kai, Hai Dian District, BEIJING 100086 (CN); Li, Jun, INDIANAPOLIS, IN 46207 (US); Chen, Ren Lei, RM 03-09, 8F, Building A, Hai Dian District, BEIJING 100085 (CN)
(74) Representative: Ruellan-Lemonnier, Brigitte

(57) **Abstract**

The present invention provides an apparatus for transmitting digital stream to a receiver, comprising: a Forward Error Correction FEC encoder for generating data blocks with FEC packets for the digital stream; and a transmitting scheduler for generating a schedule for the apparatus to transmit each of the data blocks to the receiver in burst.

## Description

### FIELD OF THE INVENTION

The present invention relates in general to an apparatus and method for transmitting digital stream, and more particularly, to an apparatus and method for transmitting digital stream in a digital wireless multimedia communication system.

### BACKGROUND OF THE INVENTION

In the analog multimedia (video and/or audio) communication, such as in the analog broadcasting communication, multimedia information in a new channel can be provided immediately when the current channel is changed into the new channel, because the multimedia information are transmitted and received smoothly, and the information in the new channel can be played immediately.

However, in a digital wireless multimedia communication for transmitting and receiving digital stream such as video and/or audio digital stream, some error protection method such as Forward Error Correction (FEC)/ Automatic Repeat request (ARQ) is used to decrease the end to end packet loss rate, which will delay the packet available time to the receiver because an effective buffer area and buffer time is needed to perform FEC/ARQ for one block of data for playback. Therefore, there is a period of time between the receipt of the command to change the channel and the providing of the newly acquired channel. Thus, there is a period of time during which video blanking occurs until the multimedia information from the new channel occurs.

Typically, when a channel change is being effected, the current video is first blanked while the tuning frequency of the tuner is changed. Once the new channel is acquired, the new video output is then unblanked. This prevents the user from seeing the abnormal behavior such as broken macro-blocks, color mismatch and/or the like during channel change during the channel changing. This blanking period, however, may seem too long before the new channel is displayed.

In order to see the newly selected channel as fast as possible, most channel changing schemes concentrate on shortening tuner response time. While these schemes are somewhat effective, there is still a period of time to wait and blank the screen in order to perform enough channel coding, such as FEC and ARQ to obtain a good quality.

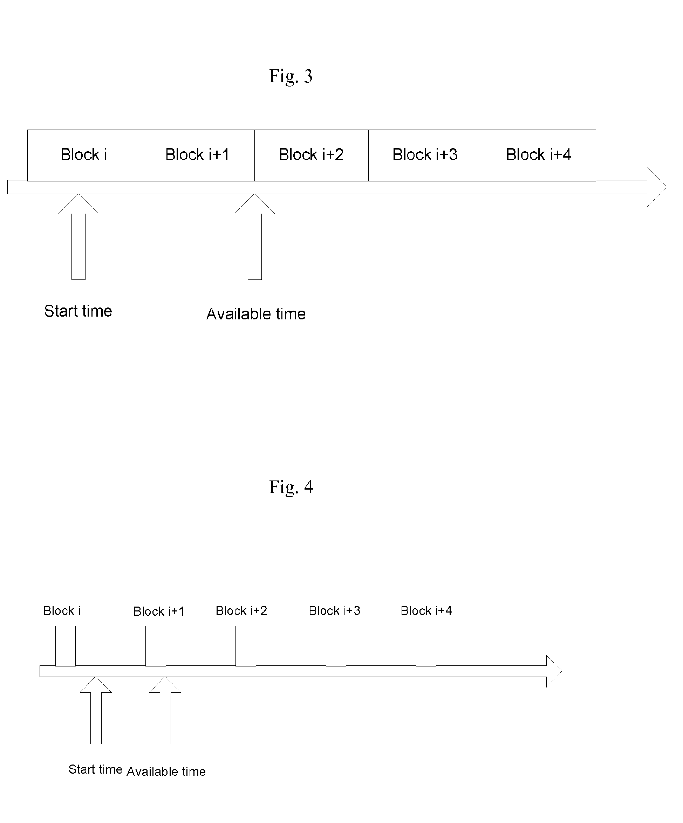

Fig. 4 is a figure for illustrating a general schedule solution of transmitting and receiving multimedia stream according to the prior art. The schedule solution is generated by the scheduler, which will be described herein in detail.

As shown in Fig. 4, five blocks of the digital stream including Block i to Block i+4 are listed as an example, and each of the blocks includes a predetermined number of packets. Assume the duration time of one of the blocks corresponding to its playing time is 1 second, and the frame rate (fr) is 30/sec. Then there are 30 frames in the block, and each of the frames is included in one or more than one packets. Each frame in the blocks has a timestamp which is a sequence of characters in the frame, for denoting the date and/or time at which a certain event occurred, such as the frame should be presented. This data is usually presented in a consistent format, allowing for easy comparison of two different records and tracking progress over time. For example, the timestamps can be 2005-10-30 T 10:45 UTC, 2007-11-09 T 11:20 UTC or Sat Jul 23 02:16:57 2005. And all packets belonging to same frame has same timestamp. The practice of recording timestamps in a consistent manner along with the actual data is called timestamping.

In the above example, the schedule generated by the scheduler controls to transmit each packet of the blocks smoothly based on its timestamp. That is, the difference between the timestamps of two successive frames is the playing time of the first frame. However, such schedule solution will cause the increase of the startup delay and the switching delay for the digital communication system. Since the FEC or ARQ error protection method is used therein and the lost media packets in one block will be recovered by FEC packets, we can not get and recover all packets of the block until the whole block including the FEC packets is received in the receiver. As shown in Fig.4, if the user starts up the receiver at the start time when Block i is receiving, then the digital stream of Block i can not be recovered and played, and the digital stream can be recovered and played at the available time until the whole Block i+1 is received. The stream and FEC decoding time is omitted herein. In this case, the start up delay will be the time from start time to available time, and is between T_{block} to 2T_{block}, where the T_{block} is the time for receiving one block of data. In the above example, the start up delay is from 1 second to 2 second. Similarly, when switching from one channel to another channel, the same delay is caused.

Therefore, it is needed to provide a method to overcome the above disadvantage in the prior art, so as to reduce the program startup and/or channel change time.

### SUMMARY OF THE INVENTION

An object of the invention is to provide an apparatus and method for transmitting digital stream, so that the start up delay and the channel change delay can be reduced.

According to one aspect of the invention, provide an apparatus for transmitting digital stream to a receiver, comprising: a Forward Error Correction FEC encoder for generating data blocks with FEC packets for the digital stream; and a transmitting scheduler for generating a schedule for the apparatus to transmit each of the data blocks to the receiver in burst.

According to another aspect of the invention, provide a method for transmitting digital stream to a receiver, comprising: generating data blocks with FEC packets for the digital stream; and generating a schedule to transmit each of the data blocks to the receiver in burst.

### BRIEF DESCRIPTION OF DRAWINGS

These and other aspects, features and advantages of the present invention will become apparent from the following description in connection with the accompanying drawings:
Fig. 1 is a diagram for illustrating a schedule solution of transmitting and receiving multimedia stream according to an embodiment of the present invention;
Fig. 2 is a block diagram illustrating an exemplary transmitter in accordance with an embodiment of the present invention;
Fig. 3 is a diagram for illustrating a staggered allocation of the digital streams in accordance with another embodiment of the present invention; and
Fig. 4 is a diagram for illustrating a general schedule solution of transmitting and receiving multimedia stream according to the prior art.

### DETAIL DESCRIPTION OF PREFERRED EMBODIMENTS

A description will now be given with reference to attached figures to illustrate many advantages/features of the present invention, according to various illustrative embodiments of the present invention. In the attached figures, the like figure numbers indicate the similar elements.

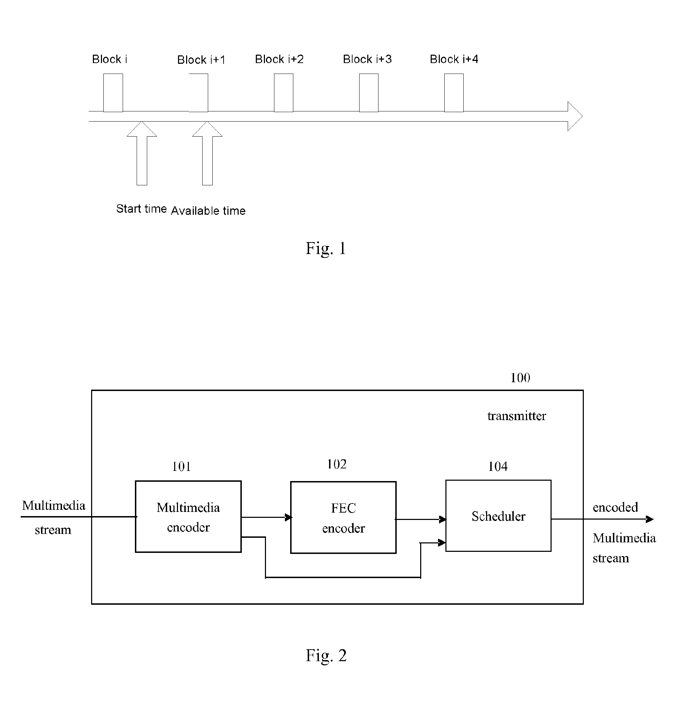

Fig. 1 is a figure for illustrating a schedule solution of transmitting and receiving multimedia stream according to an embodiment of the present invention. The scheduler controls the transmitting each block in burst as the schedule solution shown in Fig.1.

In the embodiment, Five blocks of the multimedia stream including Block i to Block i+4 are listed as an example, and each of the blocks includes a predetermined number of packets.

Assume the duration time of one of the blocks corresponding to its playing time is 1 second, and there are 30 frames in the block and each of the frames is included in one or more than one packets. Each frame in the blocks has a timestamp and all packets belonging to same frame has same timestamp. As shown in Fig.1, the whole blocks are transmitted in burst, and the burst time is very small constant value which is about 0. For example, if the bandwidth is 100Mbps, the block size is 1Mbps, then the burst time will be 0.01 second.

The scheduler in the transmitter also determines the transmitting time of each block according to the timestamp of the first packet for each block. For example, if the timestamp of the first packet of Block i and Block i+1 is Sat Jul 23 02:16:57 2005 and Sat Jul 23 02:16:58 2005 respectively which are the times when generate the packets. Then the Block i+1 will be transmitted in burst 1 second after the Block i has been transmitted in burst. Similarly, each of the Blocks will be transmitted in burst based on the timestamp of its first packet.

The advantage of the embodiment of the invention is that the start up delay or channel change delay in the receiver will be reduced greatly. The receiver can receive each block transmitted in burst as shown in Fig.1. For example, if the user starts up the receiver at the start time during the interval of receiving Block i and Block i+1, then the digital stream can be recovered and played at the available time until the whole Block i+1 is received. The stream and FEC decoding time is omitted herein. In this case, the start up delay will be the time from start time to available time, and is between T_{block} + one burst times to one burst time, where the T_{block} is the time difference of the timestamps for the first packets of the Block i and Block i+1. That is, when the user starts up the receiver at the beginning of the burst time of Block i, the start up delay will be about T_{block} + one burst time which is the longest delay according to the embodiment. If the user starts up the receiver just before the beginning of the burst time of Block i+1, the start up delay will be one burst time which is the least delay according to the embodiment. In the above example, the start up delay is from about 0 second to about 1 second. Similarly, when switching from one channel to another channel, the same delay is caused. As described above, the start up delay or the channel change delay is reduced greatly.

Fig. 2 is a block diagram illustrating an exemplary transmitter 100 in accordance with an embodiment of the present invention. The transmitter 100 is used for encoding the digital stream and transmitting the encoded digital stream in burst to a receiver, such as TV receiver; which includes a multimedia encoder 101, a FEC encoder 102 and a transmitting scheduler 104. The multimedia encoder 101 receives multimedia stream from a media source (not shown) and performs video and/or audio encoding process, such as MPEG video encoding or other video and/or encoding technology in the prior art, so as to compress the digital stream for transmitting. The FEC encoder 102 performs FEC coding for the coded digital stream output from the multimedia encoder 101 to generate data blocks with FEC packets for the digital stream. Each of the data blocks which is coded multimedia stream along with the FEC packets are controlled by a schedule generated by the transmitting scheduler 104, so as to be transmitted from the transmitter 100 to the receiver in burst over outside network, such as the multimedia broadcasting network or the IP network and so on. It is known that the coded digital stream can be transmitted in a plurality of channels, and each channel can transmit different multimedia stream, such as TV program.

According to the above embodiment, the digital stream can be transmitted and received in burst. However, the multimedia data at the burst time will occupy a relatively broader bandwidth than other time, which will cause burst problem of the bandwidth and the increase of packet loss rate. Another enhanced scheduler for multi streams will be described herein with reference to Fig.3.

Fig. 3 is a diagram for illustrating a staggered allocation of the digital streams in accordance with another embodiment of the present invention. The staggered allocation is generated by the transmitting scheduler 104 to control the transmitting of the digital streams.

In this embodiment of the present invention, the transmitting scheduler generates a schedule to transmit a plurality of digital stream, such as video and/or audio streams in a staggered mode. It is known that the data blocks with FEC packets can be with same unit, for example 1 second for all streams. But the burst time for different streams are staggered, for example, the burst time is 1s * i + 0.0s to 1s * i + 1.0s for first stream and 1s * i + 0.1s to 1s * i + 1.1s for second stream and so on. And every block is transmitted in 0.1 second. Then the transmission sequence is as shown in Fig.3. In this case, one stream can occupy the whole bandwidth for all streams, and has staggered transmitting time with other streams. Thus, the digital streams can be transmitted smoothly in the audio and/or video broadcasting networks, and the packet loss rate cause by the burst mode will be reduced.

As described above, with the method and devices in the embodiment of the invention, once a user starts up the receiver or switches a TV program channel, the new TV program can be seen with a short delay.

Although it is shown in the figures that the blocks have the same size, one skilled in the art can recognized that the blocks can have different sizes as required. Similarly, the invention is described based on multimedia stream, but other digital streams with FEC encoding can also be used.

The foregoing merely illustrates the principles of the invention and it will thus be appreciated that those skilled in the art will be able to devise numerous alternative arrangements which, although not explicitly described herein, embody the principles of the invention and are within its spirit and scope. It is to be understood that numerous modifications may be made to the illustrative embodiments and that other arrangements may be devised without departing from the spirit and scope of the present invention as defined by the appended claims.

## Claims

1. An apparatus for transmitting digital stream to a receiver, comprising:
a Forward Error Correction FEC encoder for generating data blocks with FEC packets for the digital stream; and
a transmitting scheduler for generating a schedule for the apparatus to transmit each of the data blocks to the receiver in burst.

2. The apparatus according to claim 1, wherein each of the data blocks is transmitted based on a timestamp of the first packet therein.

3. The apparatus according to claim 1 or 2, wherein the digital stream includes a plurality of video and/or audio streams.

4. The apparatus according to claim 3, wherein the plurality of video and/or audio streams are transmitted over a plurality of channels respectively to the receiver.

5. The apparatus according to claim 4, wherein the plurality of video and/or audio streams are transmitted in a staggered mode.

6. A method for transmitting digital stream to a receiver, comprising:
generating data blocks with FEC packets for the digital stream; and
generating a schedule to transmit each of the data blocks to the receiver in burst.

7. The method according to claim 6, wherein each of the data blocks is transmitted based on a timestamp of the first packet therein.

8. The method according to claim 6 or 7, wherein the digital stream includes a plurality of video and/or audio streams.

9. The method according to claim 8, wherein the plurality of video and/or audio streams are transmitted over a plurality of channels respectively to the receiver.

10. The method according to claim 9, wherein the plurality of video and/or audio streams are transmitted in a staggered mode.
